# EUROPÄISCHE PATENTSCHRIFT

(11) **EP 1 575 792 B1**
(45) Veröffentlichungstag und Bekanntmachung des Hinweises auf die Patenterteilung: **24.01.2007**
(21) Anmeldenummer: 03789050.6
(22) Anmeldetag: 18.11.2003
(51) Int. Cl.: B60G 21/055, F15B 15/12, F15B 15/20

(54) **SCHWENKMOTOR**
OSCILLATING MOTOR
MOTEUR OSCILLANT

(30) Priorität: 17.12.2002 DE 10259264
(43) Veröffentlichungstag der Anmeldung: 21.09.2005
(73) Patentinhaber: ThyssenKrupp Automotive AG, 44793 Bochum (DE)
(72) Erfinder: WEHAUS, Holger, 30449 Hannover (DE); MIDDELMANN, Volker, 85395 Attenkirchen-Thalhamm (DE)
(74) Vertreter: Adams, Steffen
(86) Internationale Anmeldenummer: PCT/EP2003/012868
(87) Internationale Veröffentlichungsnummer: WO 2004/054826

(56) Entgegenhaltungen:
- DE-A- 19 754 539
- DE-B- 1 179 124
- DE-U- 20 307 106
- PATENT ABSTRACTS OF JAPAN vol. 1997, no. 11, 28. November 1997 (1997-11-28) -& JP 09 183306 A (KAYABA IND CO LTD), 15. Juli 1997 (1997-07-15)

## Beschreibung

Die Erfindung betrifft einen Schwenkmotor für einen geteilten Stabilisator im Bereich einer Fahrzeugachse, zumindest beinhaltend ein Gehäuse, das im Bereich seiner Stirnflächen durch Deckel abgeschlossen ist und einen Rotor sowie ein Ventil aufnimmt.

Der DE-A 197 54 539 ist ein Schwenkmotor für einen geteilten Stabilisator an einer Fahrzeugachse zu entnehmen, beinhaltend einen Zylinder, der endseitig von zwei Deckeln verschlossen ist, axial am Innendurchmesser des Zylinders verlaufende radiale Rippen, eine Motorwelle mit Flügeln, die die selbe axiale Erstreckung besitzen, wie die Rippen des Zylinders, wobei die Flügel der Motorwelle und die Rippen des Zylinders einzelne Arbeitskammern bilden sowie ein Verbundsystem zwischen den Arbeitskammern, das im Schwenkmotor ein Schaltventil aufweist, das die Verbindung zwischen einzelnen Arbeitskammern im Sinne einer Fahrstabilitätskontrolle ansteuert.

Obwohl in der DE 197 54 539 A1 für das Ventil der Begriff "Schaltventil" verwendet wird, ergibt sich aus der Beschreibung dieser Schrift, dass damit auch solche Ventile gemeint sind, die stufenlos einstellbar sind (vgl. Spalte 3 Zeilen 57/58). Dies bedeutet, dass das als Schaltventil bezeichnete Ventil als Proportional-Drosselventil ausgebildet sein kann, durch das eine Drosselung zwischen den Arbeitskammern erzeugt werden kann, so dass das Ventil als Differenzdruckregelventil anzusehen ist. Die aus der DE 197 54 539 A1 offenbart somit einen Schwenkmotor gemäß dem Oberbegriff des Patentanspruchs 1.

Der Erfindung liegt die Aufgabe zugrunde, einen gattungsgemäßen Schwenkmotor dahingehend weiterzubilden, dass bei einem unbeabsichtigten plötzlichen Ausfall der Magnetkraft (z.B. infolge Stromausfall) eine fahrdynamisch sichere Funktion des Stabilisators gewährleistet ist.

Diese Aufgabe wird erfindungsgemäß dadurch gelöst, dass das Differenzdruckregelventil über zwei einander gegenüberliegende Federn unterschiedlicher Federcharakteristik verfügt, von denen die eine Feder mit der geringeren Federcharakteristik im Bereich des Elektromagneten vorgesehen ist.

Vorteilhafte Weiterbildungen des Erfindungsgegenstandes sind den Unteransprüchen zu entnehmen.

Durch den erfindungsgemäßen Schwenkmotor mit innen liegendem Differenzdruckregelventil können die Hälften eines geteilten Stabilisators hydraulisch aktiv verdreht werden. Fällt die Magnetkraft infolge einer Fehlfunktion plötzlich weg, so bewegt die Feder mit der stärkeren Federcharakteristik das Ventil automatisch in eine Sicherheitsstellung (sog. Fail-save.Stellung), so dass eine fahrdynamisch sichere Funktion des Stabilisators gewährleistet ist.

Von großem Vorteil ist, dass durch die Integration des Differenzdruckregelventils koaxial im Schwenkmotor weitere Bauteile, wie Ventilblöcke, Leitungen, Befestigungselemente und dergleichen entfallen können. Daraus resultieren kurze hydraulische Wege mit der damit einhergehenden höheren Dynamik

Das Differenzdruckregelventil beinhaltet einen Arbeitsschieber, einen Magnetstößel sowie eine koaxial dazu vorgesehene, axial zwischen Arbeitsschieber und Magnetstößel vorgesehene Schiebehülse. Ohne Magnetkraft schiebt die Feder mit der höheren Federcharakteristik den Arbeitsschieber in Richtung des Magnetstößels. Nach einem vorgebbaren Weg, zum Beispiel 2 mm, nimmt der Arbeitsschieber die koaxial dazu vorgesehene Schiebehülse mit, bis auch diese nach weiterem vorgebbaren Hub, zum Beispiel 5 mm, an einem Anschlag zur Anlage kommt. In dieser Stellung sind durch die Hülse die Kammern A und B geschlossen und P ist mit T verbunden. Diese Position bildet die Fail-save-Stellung, eine Stellung, die automatisch bei Ausfall von Betriebssystemen eintritt und eine fahrdynamisch sichere Funktion des Stabilisators gewährleistet.

Beim Aktivieren der Magnetkraft (z.B. Zündung an) verschiebt der Magnetstößel den Arbeitsschieber gegen die Kraft der Feder. Die im Bereich des Magneten vorgesehene weitere Feder bewegt die Schiebehülse entsprechend nach, bis selbige auf der anderen Seite an einem weiteren Anschlag zur Anlage kommt. In dieser Betriebsstellung gibt die Schiebehülse die Kanäle zu A und B sowie zu P und T frei. Anschließend schiebt der Magnet den Arbeitsschieber noch um einen weiteren vorgebbaren Weg, z.B. 2 mm, in eine Mittelstellung. Von hier aus arbeiten der Magnet und die Feder mit der höheren Federcharakteristik gegeneinander, und zwar um einen vorgebbaren Aktuaturweg, zum Beispiel +/- 1,5 mm.

Bei einfachem Aufbau des Schwenkmotors kann eine sehr feinfühlige Ansteuerung, insbesondere der beiden Hälften eines geteilten Stabilisators realisiert werden.

Der Erfindungsgegenstand ist anhand eines Ausführungsbeispieles in der Zeichnung dargestellt und wird wie folgt beschrieben. Es zeigen:
- Figur 1: Schwenkmotor, beinhaltend ein Differenzdruckregelventil in Fail-save-Stellung,
- Figur 2: Schwenkmotor gemäß Figur 1 mit einem in Arbeitsstellung befindlichen Differenzdruckregelventil.

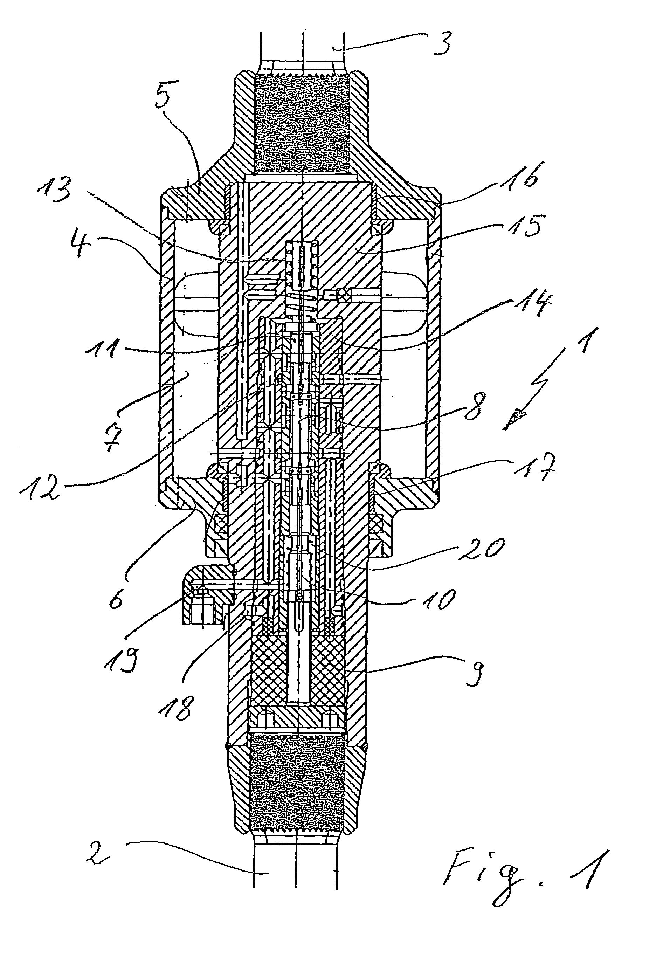

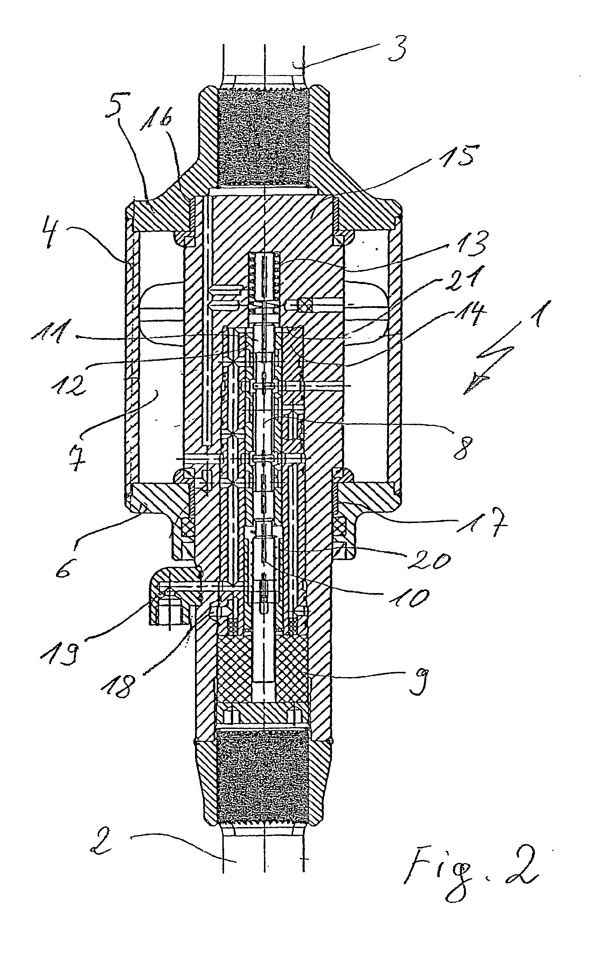

In den Figuren 1 und 2 wird ein Schwenkmotor 1 beschrieben, der aktiv die hier nur angedeuteten Hälften 2,3 eines nicht weiter dargestellten Stabilisators hydraulisch verdreht. Der Schwenkmotor 1 beinhaltet ein Gehäuse 4, das im Bereich seiner Stirnseiten von Deckeln 5,6 abgeschlossen ist. Innerhalb des Gehäuses 4 sind Kammern 7 vorgesehen, die als Arbeitskammern dienen und zur Fahrstabilitätskontrolle beitragen.

Koaxial zum Gehäuse 4 ist ein Differenzdruckregelventil 8 angeordnet, das im Wesentlichen folgende Komponenten beinhaltet:

Einen Elektromagneten 9, einen dadurch betätigten Magnetstößel 10, einen Arbeitsschieber 11, eine Schiebehülse 12, eine Feder 13 sowie einen Cartridge-Einsatz 14. Innerhalb des Gehäuses 4 ist ein Rotor 15, beispielsweise über Gleitlager 16,17, relativ zum Gehäuse 4 drehbeweglich vorgesehen. Ferner ist ein Pumpenanschluss 18 sowie ein Tankanschluss 19 außerhalb des Gehäuses 4 angeordnet. Der Magnetstößel 10 ist von einer Feder 20 umgeben, die eine geringere Federcharakteristik als die Feder 13 aufweist.

Figur 1 zeigt die Fail-save-Stellung des Schwenkmotors 1, während Figur 2 die Betriebsstellung (z.B. bei Zündung der Brennkraftmaschine) definiert. Die Schiebehülse 12 ist koaxial zum Arbeitsschieber 11 angeordnet. Ohne Magnetkraft, d.h. in der Fail-save-Stellung des Schwenkmotors 1, schiebt die rechte Feder 13 aufgrund ihrer höheren Federcharakteristik den Arbeitsschieber 11 nach links, und zwar in Richtung des Elektromagneten 9. Nach ca. 2 mm nimmt der Arbeitsschieber 11 mit seinem linken Führungsdurchmesser die Schiebehülse 12 mit, bis auch diese nach weiterem Hub von 5 mm auf der linken Seite zur Anlage kommt. In dieser Stellung sind durch die Schiebehülse 12 die Kammern A und B geschlossen und P mit T verbunden.

Figur 2 zeigt den Betriebszustand des Schwenkmotors 1. Bei Aktivierung der Magnetkraft (z.B. Zündung an) schiebt der Magnetstößel 10 den Arbeitschieber 11 gegen die Kraft der Feder 13 nach rechts. Die linke Feder 20 bewegt die Schiebehülse 12 entsprechend nach, bis selbige auf der rechten Seite am Grund einer Stufenbohrung 21 im Rotor 15 anliegt. In dieser Stellung gibt die Schiebehülse 12 die normalen Kanäle zu A und B sowie zu P und T frei. Danach wird durch die Magnetkraft des Elektromagneten 9 der Arbeitsschieber 11 um einen weiteren Weg, z.B. 2 mm, nach rechts in eine Mittelstellung bewegt. Von hier aus arbeiten der Elektromagnet 9 und die rechte Feder 13 gegeneinander, und zwar um einen Aktuatorweg von z.B. +/-1,5 mm.

### Bezugszeichenliste

- 1: Schwenkmotor
- 2: Hälfte
- 3: Hälfte
- 4: Gehäuse
- 5: Deckel
- 6: Deckel
- 7: Kammern
- 8: Differenzdruckregelventil
- 9: Elektromagnet
- 10: Magnetstößel
- 11: Arbeitsschieber
- 12: Schiebehülse
- 13: Feder
- 14: Cartridge-Einsatz
- 15: Rotor
- 16: Gleitlager
- 17: Gleitlager
- 18: Pumpenanschluss
- 19: Tankanschluss
- 20: Feder
- 21: Stufenbohrung

## Patentansprüche

1. Schwenkmotor für einen geteilten Stabilisator (2,3) im Bereich einer Fahrzeugachse, zumindest beinhaltend ein Gehäuse (4), das im Bereich seiner Stirnflächen durch Deckel (5,6) abgeschlossen ist und einen Rotor (15) sowie ein Ventil (8) aufnimmt, wobei das Ventil (8) ein zum Gehäuse (4) koaxial angeordnetes, mindestens einen Elektromagneten (9) beinhaltendes Differenzdruckregelventil ist, **dadurch gekennzeichnet, dass** das Differenzdruckregelventil (8) über zwei einander gegenüberliegende Federn (13,20) unterschiedlicher Federcharakteristik verfügt, von denen die eine Feder (20) mit der geringeren Federcharaktenstik im Bereich des Elektromagneten (9) vorgesehen ist.

2. Schwenkmotor nach Anspruch 1, **dadurch gekennzeichnet, dass** axial zwischen den Federn (13,20) mindestens ein axial bewegbares Bauteil (10,11,12) zur Erzielung unterschiedlicher Steuerzustände des Differenzdruckregelventiles (8) vorgesehen ist.

3. Schwenkmotor nach Anspruch 1 oder 2, **dadurch gekennzeichnet, dass** zwischen den Federn (13,20) ein Arbeitsschieber (11), eine Schiebehülse (12) und ein Magnetstößel (10) vorgesehen sind, wobei der Arbeitsschieber (12) die koaxial dazu vorgesehene Schiebehülse (12) über die Feder (13) ohne Magnetkraft in Richtung des axial gegenüberliegenden Magnetstößels (10) bewegt.

4. Schwenkmotor nach einem der Ansprüche 1 bis 3, **dadurch gekennzeichnet, dass** die Betätigung des Arbeitsschiebers (11), ausschließlich durch die Feder (13), einen Ruhezustand definiert.

5. Schwenkmotor nach einem der Ansprüche 1 bis 4, **dadurch gekennzeichnet, dass** nach der Aktivierung des Elektromagneten (9) der Magnetstößel (10) den Arbeitsschieber (11) gegen die Kraft der Feder (13) in Richtung seiner Ausgangsstellung bewegt, wobei die Feder (20) die Schiebehülse (12) bis zu einer vorgebbaren Endstellung (21) nachschiebt.

6. Schwenkmotor nach einem der Ansprüche 1 bis 5, **dadurch gekennzeichnet, dass,** nachdem die Schiebehülse (12) ihre Endposition (21) erreicht hat, durch den Elektromagneten (9) zur Einstellung einer Arbeitsstellung eine weitere axiale Verschiebung des Arbeitsschiebers (11) herbeiführbar ist.

7. Schwenkmotor nach einem der Ansprüche 1 bis 6, **dadurch gekennzeichnet, dass** in der Arbeitsstellung Elektromagnet (9) und Feder (13) zur Erzielung eines vorgebbaren Aktuatorweges des Arbeitsschiebers (11) gegeneinander bewegbar sind.

8. Schwenkmotor nach einem der Ansprüche 1 bis 7, **dadurch gekennzeichnet, dass** das Differenzdruckregelventil (8) innerhalb des Rotors (15) angeordnet ist.

9. Schwenkmotor nach einem der Ansprüche 1 bis 8, **dadurch gekennzeichnet, dass** der Elektromagnet (9) außerhalb des Gehäuses (4) vorgesehen ist.

10. Schwenkmotor nach einem der Ansprüche 1 bis 9, **dadurch gekennzeichnet, dass** der Pumpenanschluss (18) und der Tankanschluss (19) außerhalb des Gehäuses (4) vorgesehen sind.

## Claims

1. Oscillating motor for a split stabilizer (2, 3) in the region of a vehicle axle, at least including a housing (4) which is closed in the region of its end surfaces by means of lids (5, 6) and accommodates a rotor (15) and a valve (8), wherein the valve (8) is a differential pressure control valve which is disposed in a coaxial manner with respect to the housing (4) and includes at least one solenoid (9), **characterised in that** the differential pressure control valve (8) has two mutually opposing springs (13, 20) having different spring characteristics, of which the spring (20) having the lower spring characteristic is provided in the region of the solenoid (9).

2. Oscillating motor as claimed in Claim 1, **characterised in that** at least one axially movable component (10, 11, 12) is axially provided between the springs (13, 20) in order to achieve different control states of the differential pressure control valve (8).

3. Oscillating motor as claimed in Claim 1 or 2, **characterised in that** a working slide (11), a sliding sleeve (12) and a magnetic tappet (10) are provided between the springs (13, 20), wherein the working slide (12) moves the sliding sleeve (12), provided in a coaxial manner with respect thereto, in the direction of the axially opposite magnetic tappet (10) via the spring (13) without any magnetic force.

4. Oscillating motor as claimed in any one of Claims 1 to 3, **characterised in that** actuation of the working slide (11), exclusively by the spring (13), defines a non-operational state.

5. Oscillating motor as claimed in any one of Claims 1 to 4, **characterised in that** after activation of the solenoid (9), the magnetic tappet (10) moves the working slide (11) in the direction of its starting position against the force of the spring (13), wherein the spring (20) subsequently pushes the sliding sleeve (12) to a predeterminable end position (21).

6. Oscillating motor as claimed in any one of Claims 1 to 5, **characterised in that** after the sliding sleeve (12) has reached its end position (21), the solenoid (9) can further axially displace the working slide (11) to set a working position.

7. Oscillating motor as claimed in any one of Claims 1 to 6, **characterised in that** in the working position the solenoid (9) and spring (13) can be moved with respect to one another to reach a predeterminable actuator path of the working slide (11).

8. Oscillating motor as claimed in any one of Claims 1 to 7, **characterised in that** the differential pressure control valve (8) is disposed within the rotor (15).

9. Oscillating motor as claimed in any one of Claims 1 to 8, **characterised in that** the solenoid (9) is provided outside of the housing (4).

10. Oscillating motor as claimed in any one of Claims 1 to 9, **characterised in that** the pump connection (18) and the tank connection (19) are provided outside of the housing (4).

## Revendications

1. Moteur oscillant pour un stabilisateur divisé (2, 3) dans la région d'un essieu de véhicule, comprenant au moins un carter (4) qui est fermé dans la région de ses faces frontales par des couvercles (5, 6) et reçoit un rotor (15) de même qu'une soupape (8), la soupape (8) étant une soupape du régulation à pression différentielle comprenant un électroaimant (9), disposée coaxialement par rapport au carter (4), **caractérisé en ce que** la soupape de régulation à pression différentielle (8) dispose de caractéristiques élastiques différentes dues à deux ressorts (13, 20) opposés dont l'un (20), doté d'une raideur inférieure, est prévu dans la région de l'électroaimant (9).

2. Moteur oscillant selon la revendication 1, **caractérisé en ce qu'**au moins une pièce (10, 11, 12) mobile axialement est prévue axialement entre les ressorts (13, 20) pour obtenir des états de commande différents de la soupape de régulation à pression différentielle (8).

3. Moteur oscillant selon la revendication 1 ou 2, **caractérisé en ce qu'**un tiroir (11), un manchon coulissant (12) et un poussoir magnétique (10) sont prévus entre les ressorts (13, 20), le tiroir (11) déplaçant le manchon coulissant (12) qui lui est coaxial, par l'intermédiaire du ressort (13), en l'absence de force magnétique, dans la direction du poussoir magnétique (10) opposé.

4. Moteur oscillant selon l'une des revendications 1 à 3, **caractérisé en ce que** l'actionnement du tiroir (11) exclusivement par l'intermédiaire du ressort (13), définit un état de repos.

5. Moteur oscillant selon l'une des revendications 1 à 4, **caractérisé en ce que**, après activation de l'électroaimant (9), le poussoir magnétique (10) déplace le tiroir (11) dans la direction de sa position initiale, en opposition à la force du ressort (13), le ressort (20) repoussant le manchon coulissant (12) jusqu'à une position terminale (21) prédéterminée.

6. Moteur oscillant selon l'une des revendications 1 à 5, **caractérisé en ce que**, après que le manchon coulissant (12) a atteint sa position terminale (21), un coulissement supplémentaire du tiroir (11) peut être produit par l'électroaimant (9) pour établir une position de travail.

7. Moteur oscillant selon l'une des revendications 1 à 6, **caractérisé en ce que**, dans la position de travail, l'électroaimant (9) et le ressort (13) peuvent être déplacés l'un par rapport à l'autre pour produire un déplacement d'actionnement prédéterminé du tiroir (11).

8. Moteur oscillant selon l'une des revendications 1 à 7, **caractérisé en ce que** la soupape de régulation à pression différentielle (8) est agencée à l'intérieur du rotor (15).

9. Moteur oscillant selon l'une des revendications 1 à 8, **caractérisé en ce que** l'électroaimant (9) est prévu à l'extérieur du carter (4).

10. Moteur oscillant selon l'une des revendications 1 à 9, **caractérisé en ce que** le raccord de pompe (18) et le raccord de réservoir (19) sont prévus à l'extérieur du carter (4).
